# EUROPEAN PATENT SPECIFICATION

(11) **EP 1 785 676 B1**
(45) Date of publication and mention of the grant of the patent: **27.05.2009**
(21) Application number: 06291751.3
(22) Date of filing: 10.11.2006
(51) Int. Cl.: F24F 7/08, F24F 12/00, F24F 13/10

(54) **Ventilating apparatus and method for controlling the same**
Lüftungsgerät und Verfahren zur Steuerung desselben
Appareil de ventilation et procédé de commande de celui-ci

(30) Priority: 14.11.2005 KR 20050108787
(43) Date of publication of application: 16.05.2007
(73) Proprietor: LG Electronics Inc., Youngdungpo-Gu Seoul (KR)
(72) Inventor: Choi, Dong Hwan, Dongrae-ku Busan-si (KR); Kim, Kyung Hwan, Oeiwang-si Kyunggi-do (KR); Yim, Nam Sik, Seocho-ku Seoul (KR); Choi, Keun Hyoung, Dongjak-ku Seoul (KR)
(74) Representative: Verdure, Stéphane

(56) References cited:
- EP-A1- 1 132 690
- EP-A2- 0 044 560
- EP-A2- 1 001 228
- DE-U1- 20 302 221
- JP-A- 2 010 040

## Description

### 1. Field of the Invention

The present invention relates to a ventilating apparatus and, more particularly, to a large capacity ventilating apparatus reducing the flow resistance of the air as ventilating a large amount.

### 2. Description of the Conventional Art

These days, the interests on maintaining the indoor environments people live in agreeable are getting increased. It is limited for the agreeableness of the indoor environment to be maintained by controlling the common air conditioning environments such as maintaining the indoor temperature/humidity. Therefore, the ventilating system inflowing the more clean and agreeable air into the inside of the room as exchanging the indoor air and the outdoor air directly is in the limelight.

The ventilating system is a system exhausting the harmful substances such as the minute dusts, bacteria, harmful chemical substances of indoors with the exhaust air to outside and inhaling the clean air of outside to inside forcibly.

The factors concerned importantly for the ventilating system are i) the enough ventilating capacity suits the interior capacity, ii) the prevention of the influx of substances such as rain and etc through the inlet and the outlet for the air, iii) the prevention of the air exhausted through the outlet to be reentered through the inlet, iv) the prevention of the loss of heat in the indoors, v) the convenience for installing and etc.

The conventional large capacity ventilating apparatus has some disadvantages that the heat transferring exchanger and the fan are laminated top and bottom, and the connection paths of the heat transferring exchanger and the fan are complicated.

According to the conventional art, the number of the heat transferring exchanger to be laminated up top bottom is limited as the heat transferring exchanger and fan are laminated top and bottom. Therefore, the ventilating capacity cannot be enlarged more at a place where the more ventilating capacity is needed.

Furthermore, the flow resistance in the flowing path of the air blowing by a fan gets bigger as the connection path of the heat transferring exchanger and the fan is complicated. Therefore, the power dissipation of the fan is increased, a large capacity fan is needed, and finally, the manufacturing cost is increased.

Moreover, a separate air conditioner has to be used to make an air conditioning environment on the temperature, humidity and etc as the internal organization of the large capacity ventilating apparatus as above is composed of a heat transferring exchanger and a fan.

JP 02010040 discloses a ventilating apparatus having similarities with the one of the present invention. However, an outer air always (rather than selectively) passes through a heat exchanger.

### SUMMARY OF THE INVENTION

Accordingly, the present invention is directed to a ventilating apparatus that substantially obviates one or more problems due to limitations and disadvantages of the related art.

An object of the present invention is to provide a ventilating apparatus reducing the flow resistance generated in the inside of the apparatus during the operation of the ventilating apparatus and is, more particularly, to provide a ventilating apparatus capable of ventilating a large amount under the condition that the flow resistance is reduced.

Another object of the present invention is to provide a ventilating apparatus capable of controlling not only the ventilation but also the temperature, the humidity and etc for providing the most suitable air conditioning environment as dividing the operating modes.

The ventilating apparatus according to the present invention comprises a heat exchange module that the various heat transferring exchangers are laminated top and bottom; a blowing module arranged horizontally with the heat exchange module and flowing the air heat exchanged by the heat exchange module compulsorily by the fans; and a cabinet containing the heat exchange module and the blowing module.

The ventilating apparatus according to the present invention complies with claim 1 and comprises an outer air suction duct having an outer air inlet opening at an end; an inner air suction duct having an inner air inlet opening at an end; a heat transferring exchanger heat exchanging the outer air and the inner air inhaled through the outer air suction duct and the inner air suction duct; a blowing module discharging the outer air and the inner air passed through the heat transferring exchanger to indoor and outdoor individually; and a damper controlling the flowing direction of the outer air inhaled through the outer air suction duct.

It is possible for the controlling method of the ventilating apparatus according to the present invention to be achieved optionally with the heat exchange ventilation mode discharging the inhaled outer air into the indoor after heat exchanged with the inner air exhausted as passing through the heat transferring exchanger, or the general ventilation mode discharging the outer air inhaled into the indoor directly without passing through the heat transferring exchanger.

According to the present invention, the embodiment of the large capacity ventilating apparatus becomes easy as forming the heat exchange module and the blowing module horizontally. Further, the flow resistance generated in the inside of the apparatus during the general ventilation mode is minimized.

Furthermore, it is effective that the temperature and the humidity conditions and the ventilation as well are capable of coincided with the required environments of the users to maintain the indoor environment more pleasingly.

Moreover, it is effective that the design of the outdoor discharging duct is easy as the connecting pipes of the inner air and the outer air are arranged at the upper part of the ventilating apparatus.

### BRIEF DESCRIPTION OF THE DRAWING

FIG. 1 is a perspective view of the ventilating apparatus according to the present invention,
FIG. 2 is a perspective view illustrating the internal structure of the ventilating apparatus according to the present invention,
FIG. 3 is a perspective view showing the straight lower side of the outdoor air intake of the heat transferring exchanger more particularly,
FIG. 4 is a perspective view showing the straight lower side of the indoor air intake of the heat transferring exchanger more particularly,
FIG. 5 is a cross-sectional view of the lower side of the outdoor air intake,
FIG. 6 is a schematic perspective view of the heat transferring exchanger of the present invention,
FIG. 7 is a lateral cross-sectional view of illustrating the location of the damper under the heat exchanger ventilation mode,
FIG. 8 is a schematic view illustrating the operation inhaling the outer air and the inner air to the heat transferring exchanger under the heat exchange ventilation mode,
FIG. 9 is a schematic view illustrating the operation that the outer air and the inner air are discharged from the heat transferring exchanger under the heat exchange ventilation mode,
FIG. 10 is a lateral cross-sectional view illustrating the location of the damper under the general ventilation mode,
FIG. 11 is a block diagram of the ventilating apparatus according to the present invention,
FIG. 12 is an algorithm of the controlling method of the ventilating apparatus according to the present invention.

### DETAILED DESCRIPTION OF THE INVENTION

Reference will now be made in detail hereinafter as for the preferred embodiment of the present invention with reference to the accompanying drawings.

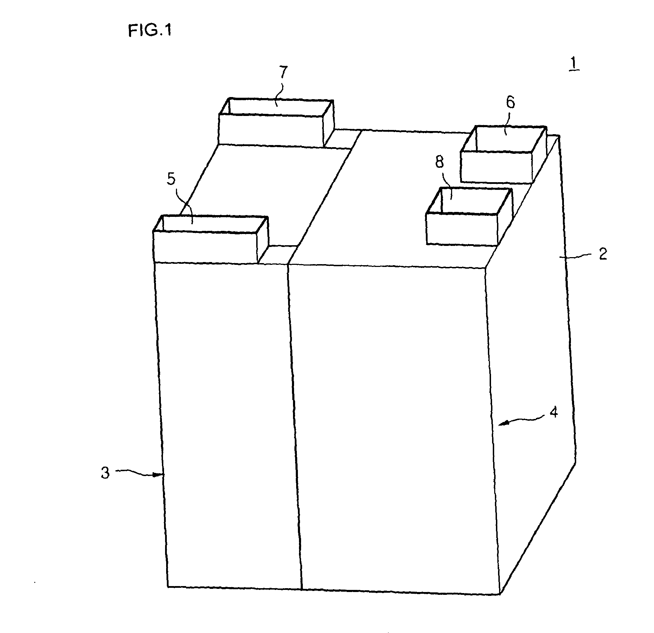

FIG. 1 is a perspective view of the ventilating apparatus according to the present invention.

Referring to FIG. 1, the ventilating apparatus of the present invention comprises a cabinet 2 forming the external appearance of the apparatus, a heat exchange module 3 needed for the operation of the ventilating apparatus in the cabinet 2, a blowing module 4 composed as separated as a horizontal organization with the heat exchange module 3.

It is advantageous that the entire height of the ventilating apparatus gets lower, and the number of the heat transferring exchanger 30 may be contained in up and downwards of the heat exchange module 3 is increased as the heat exchange module 3 and the blowing module 4 are separated as a horizontal organization. That is, the number of the heat transferring exchanger 30 may be laminated top and bottom is increased when the height of the interior space is limited.

An outer air inlet opening 5 inhaling the outer air and an inner air inlet opening 7 inhaling the inner air are formed at the heat exchange module 3. Further, an outer air discharging opening 8 discharging the outer air and an inner air discharging opening 6 are installed at the blowing module 4. Especially, the outer air inlet opening 5, the inner air inlet opening 7 inhaling the inner air, the outer air discharging opening 8, and the inner air discharging opening 6 are formed at the upper side of the cabinet 2 so as to easily connected to the outer duct connected with the ventilating apparatus.

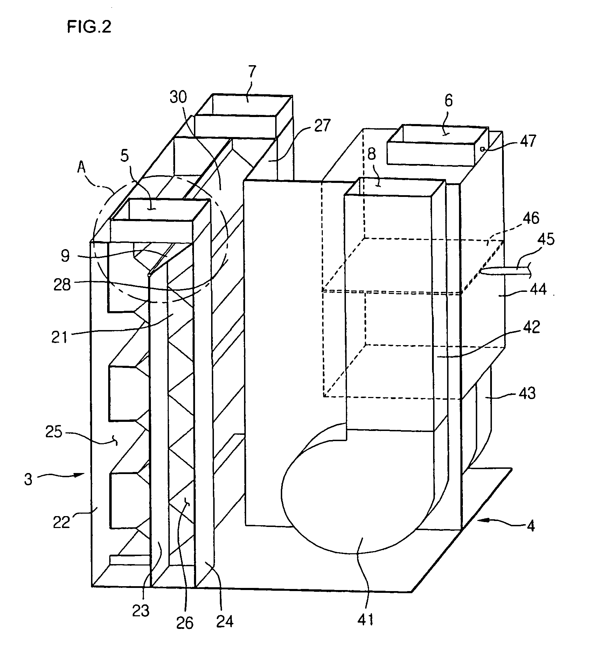

FIG. 2 is a perspective view illustrating the internal structure of the ventilating apparatus according to the present invention.

In the FIG. 2, a part of the cabinet is illustrated as incised to illustrate the internal organization of the ventilating apparatus particularly.

Referring to FIG. 2, a multiple heat transferring exchanger 30 is laminated as to and bottom in the heat exchange module 3, and the path guiding organization guiding the inflow and the outflow of the air to the heat transferring exchanger 30 is further provided.

First, the suction to the heat transferring exchanger 30 is described. The first partition 22, the second partition 23, and the third partition 24 guiding the inflowing of the air to the inside of the heat transferring exchanger 30 are formed at the lower side of the outer air inlet opening 5. The interval between the first partition 22 and the second partition 23 is forming the first duct 25, and the interval between the second partition 23 and the third partition 24 is forming the second duct 26. Further, the outer air inhaled through the outer air inlet opening 5 may be inflow to the first duct 25 and the second duct 26 selectively as the damper 9 is set on the top of the second partition 23 and rotated in the right and left directions. The outer air suction closing shield 21 may be further formed adjacent to each other at the end part of the heat transferring exchanger 30 to inflow the air inhaled to the first duct and the second duct 25 and 26 to the right side(discharging side) or the left side(inhaling side) of the heat transferring exchanger 30.

The lower side of the inner air inlet opening 7 is also described with the organization of the flowing path guide. In case that the heat transferring exchanging of the flow resistance of the air applied to the blowing module 4 is not achieved, it is possible for the entire of the inner air and the outer air not to pass through the heat transferring exchanger.

The outer air inhaled through the first duct 25 is transferred to the blowing module 4 after passing through the heat transferring exchanger 30. The flowing of the outer air above is called as a heat exchanging ventilating mode because of the inner air and the heat exchanger.

On the other hand, the outer air inhaled through the second duct 26 is transferred to the blowing module 4 directly without passing through the heat transferring exchanger 30. The flowing of the outer air above is called as the general ventilating mode as it isn't heat exchanged with the inner air. It is advantageous for the general ventilating mode not to have the flow resistance generated during the passing through the heat transferring exchanger.

The flowing path guide organization of the discharging side of the heat transferring exchanger 30 is described from now on. The air discharged forward of the heat transferring exchanger 30 flows in one direction by the inner air discharge closing shield 28 and the outer air discharge closing shield 27. That is, the outer air discharged from the heat transferring exchanger 30 is guided to be flow to the air supply fan 43 by the outer air discharging closing shield 27. The inner air is also guided to the air discharge fan 41 by the inner air discharging closing shield 28.

The organization of blowing module 4 is described from now on.

The air supplying fan 43 and the air discharging fan 41 are provided to the blowing module 4, and the space of the both sides where the air supplying fan 43 and the air discharging fan 41 are installed are divided by a partition. The partition prevents the mixing of the outer air and the inner air as connected with the outer air discharging closing shield 27 and the inner air discharging closing shield 28. The centrifugal fans inhaling air in the axial direction and discharging air in the radiant direction are used for the fans 41 and 43. The centrifugal fans are profitable in the matter of the air quantity and the noise.

Further, an outer air discharge duct 44 and an inner air discharge duct 42 guiding each of the air discharged from the fans 41 and 43 to the outer air discharging outlet 6 and the inner air discharging outlet are formed.

Furthermore, a humidifier for controlling the humidity of the outer air is installed in the inside of the outer air discharge duct 44. The humidifier includes an eject nozzle 45 ejecting water and a humidifying mesh 46 applying humidity to air as wet by the ejected water from the eject nozzle 45. The outer air discharge outlet 6 has a humidity sensor at the end part to control the operation of the humidifier.

The humidifier is not limited to the form presented in the present embodiment, and obviously other forms of humidifier may be used.

The brief movements and the operations of the ventilating apparatus formed as the above-mentioned organization is described from now on.

The ventilating apparatus of the present invention is, as already described briefly, operated in two kinds of modes that are the heat exchange mode and the general ventilating mode. It is due to the operation that the damper 9 changes the inlet path of the heat transferring exchanger 30.

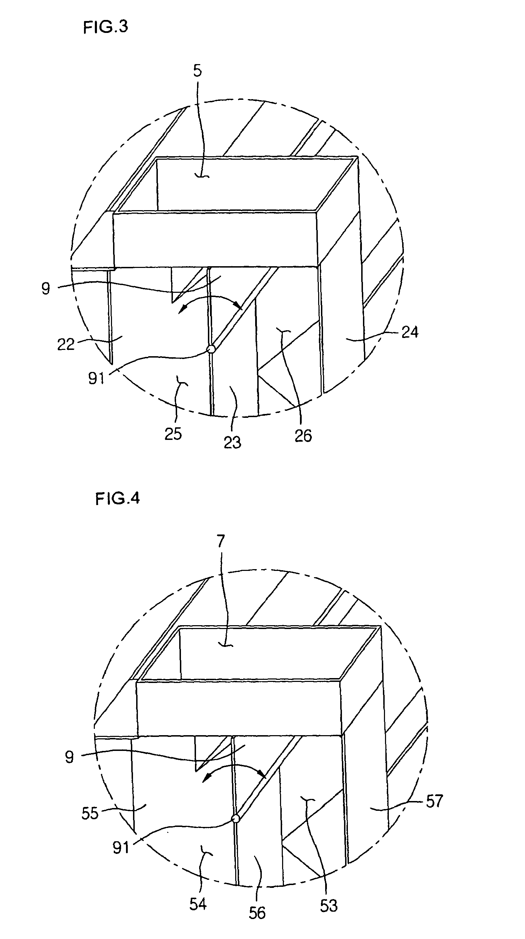

FIG. 3 is a perspective view showing the straight lower side of the outdoor air intake of the heat transferring exchanger more particularly, and FIG. 4 is a perspective view showing the straight lower side of the indoor air intake of the heat transferring exchanger more particularly.

Referring to FIGS. 3 and 4, the first partition 22, the second partition 23, and the third partition 24 for guiding inflow of the air into the heat transferring exchanger are installed at the suction duct of the lower side of the outer air inlet opening 5. The interval between the first partition 22 and the second partition 23 is forming the first duct 25, and the interval between the second partition 23 and the third partition 24 is forming the second duct 26. Further, the outer air inhaled through the outer air inlet opening 5 flows properly to the first duct 25 or the second duct 26 as the damper arranged as connected with the hinge 91 on the top of the second partition is controlled in the right and left direction.

The above-mentioned organization is formed at the lower side of the inner air inlet opening 7 as the same form. Therefore, the fourth partition 55, the fifth partition 56, and the sixth partition 57 are formed at the inner air suction duct. Further, the interval between the fourth partition 55 and the fifth partition 56 is forming the third duct 54, and the interval between the fifth partition 56 and the sixth partition 57 is forming the fourth duct 53. Furthermore, a damper of the same form is formed on the top part of the fifth partition 56.

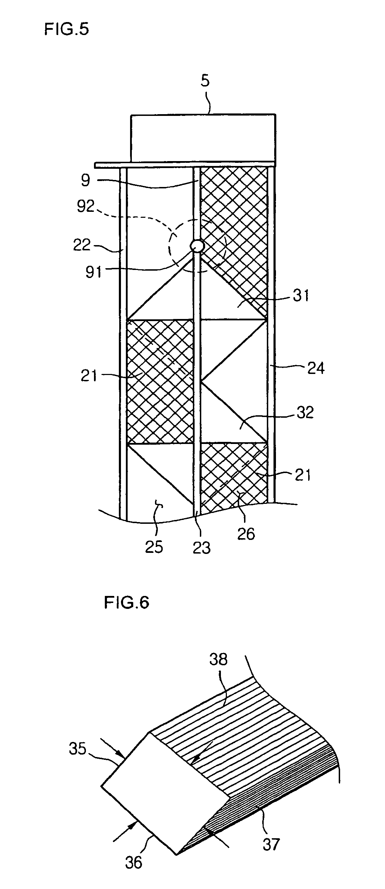

FIG. 5 is a cross-sectional view of the lower side of the outdoor air intake.

Referring to FIG. 5, the operation of the damper is understood more clearly.

The inner air inhaled through the outer air inlet opening 5 inflows to the first duct 25 or the second duct 26 by the damper 9, and is guided to the heat transferring exchanger 30 after the inner air is inhaled.

The outer air inhaled into the second duct 26 may not pass through the heat transferring exchanger 30. An outer air suction closing shield 21 is installed at the place that the first duct 25, the second duct 26 and the end part of the heat transferring exchanger 30 meet. The outer air suction closing shield 21 let the outer air passing through the outer air suction duct 25 and 26 be transferred to the right location.

A motor 92 is connected with a side of the damper 9 to achieve the rotating apparatus of the damper 9 connected with the second partition and the hinge.

FIG. 6 is a schematic perspective view of the heat transferring exchanger of the present invention.

Referring to FIG. 6, the first side 35 and the second side 36 inhales the outer air and inner air in accordance with the laminating condition of the heat transferring exchanger.

Further, the third side 37 and the fourth side 38 inhales the outer air and inner air exchanged in accordance with the laminating condition of the heat transferring exchanger.

That is, when the inner air is inhaled to one of the heat transferring exchanger through the first side 35, the exhausted air is inhaled to the heat transferring exchanger on top of the above heat transferring exchanger through the third side 37.

The exhausting fan and the air supplying fan may be set together on a side of the heat transferring exchanger in accordance with the above-mentioned organization. Further, it is advantageous that the organization pf the ventilating apparatus becomes simpler and the blowing course gets shorter.

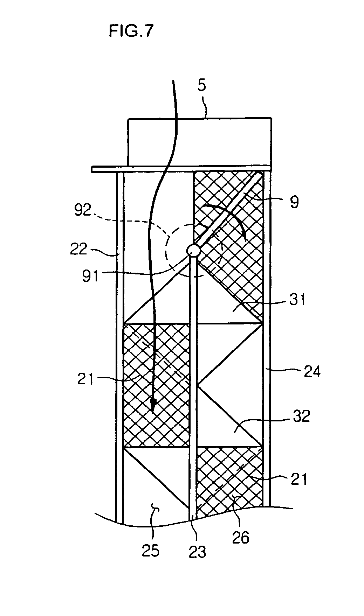

FIG. 7 is a lateral cross-sectional view of illustrating the location of the damper under the heat exchanger ventilation mode.

Referring to FIG. 7, the damper 9 is rotated in the right direction. At this time, the first duct 25 is opened and the outer air inflows into the inside of it, and passes through the heat transferring exchanger 31. The outer air may, however, not pass through the part of the first duct 25 closed by the outer air flowing closing shield.

Furthermore, the indoor air inflowing through the inner air inlet opening 7 flows to the air exhaust fan 41 through the part closed by the outer air flowing closing shield 21. Therefore, the inner air and the outer air inflow into the ventilating apparatus of the present invention through a side of the heat transferring exchanger 30 at the same time. The inner air and the outer air inhaled are also exhausted through each of the opposite direction of the inhaled direction.

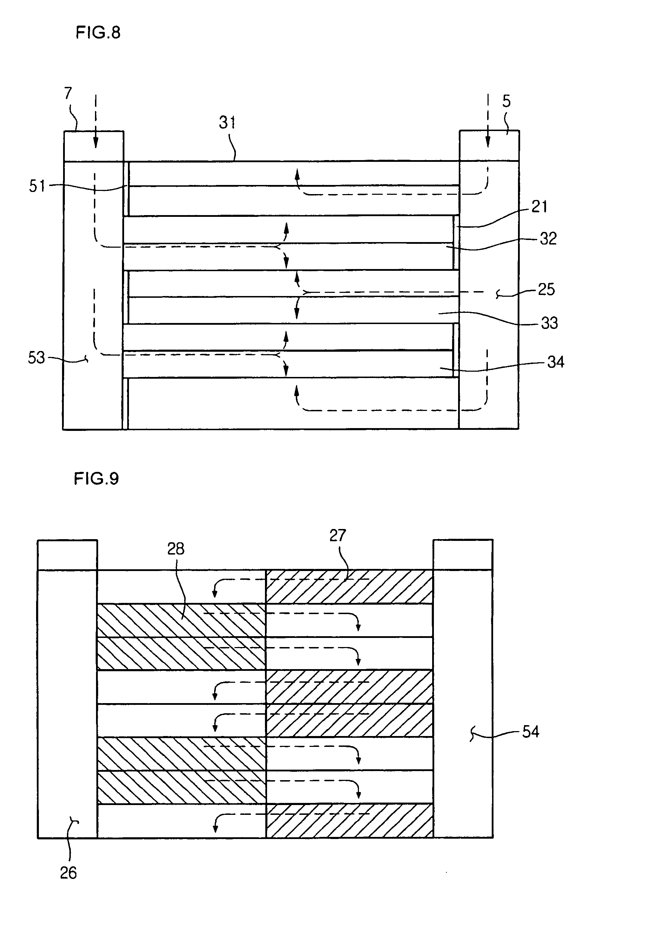

FIG. 8 is a schematic view illustrating the operation inhaling the outer air and the inner air to the heat transferring exchanger under the heat exchange ventilation mode, and FIG. 9 is a schematic view illustrating the operation that the outer air and the inner air are discharged from the heat transferring exchanger under the heat exchange ventilation mode.

Referring to FIGS. 8 and 9, the outer air inhaled through the outer air inlet opening 5 flows into a gap of a side of the heat transferring exchanger 31 and 33 not closed by the outer air flowing closing shield 21. Further, the inner air inhaled through the inner air inlet opening 7 flows into the other gap of the heat transferring exchanger 32 and 34 not closed by the inner air flowing closing shield 51.

Meanwhile, the flowing direction of the inner air and the outer air discharged after being heat exchanged is decided by the outer air discharging closing shield and the 27 and the inner air discharging closing shield 28. That is, the outer air and the inner air are discharged to the indoor and the outdoor as the outer air heat exchanged is guided to the air supply fan 43 and the inner air heat exchanged is guided to the exhaust fan.

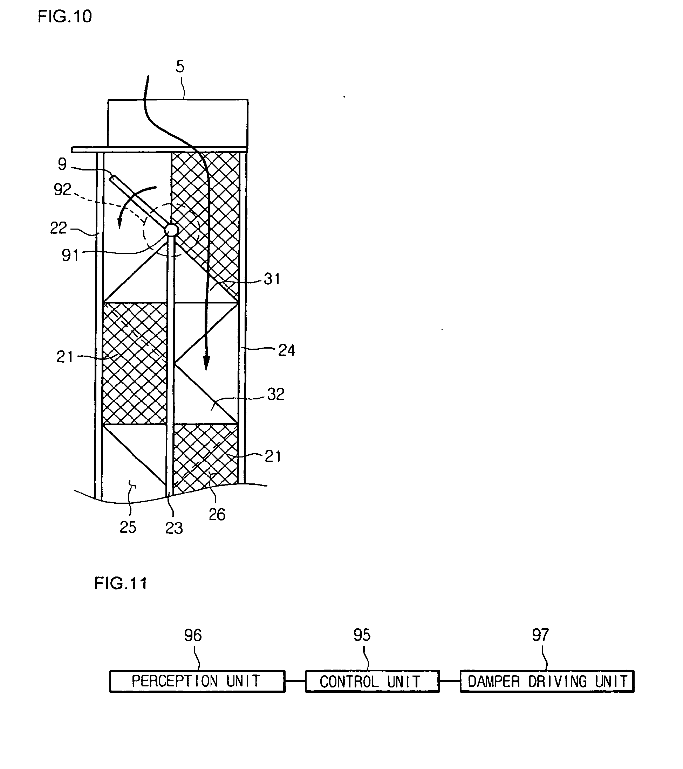

FIG. 10 is a lateral cross-sectional view illustrating the location of the damper under the general ventilation mode.

Referring to FIG. 10, the damper moves in the left direction, and the outer air inflows into the second duct 26 during the general ventilating mode. And then, the outer air is guided to the outer air discharging closing shield 27 and inflows into the air supply fan 43 without passing through the heat transferring exchanger 30. It is advantageous that the flow resistance of the outer air gets lower as the air doesn't pass through the heat transferring exchanger 30.

The inflowing of the outer air passing through the second duct 26 may also be controlled by the outer air inflowing closing shield 21 during the general ventilating mode.

The great loss of the pressure caused by the complicated internal organization is reduced as the outer air is directly supplied without heat exchanging during the general ventilating mode. Further, when the general mode is necessary is spring and autumn, the period that the difference of the temperature of the indoor and the outdoor isn't great. Desirably, the general mode is achieved when the absolute value of the temperature of the outer air and the inner air is under the set point. More desirably, the general ventilating mode is achieved when the set point is 3 to 7 degrees C.

The power dissipation, the pressure drop, and the noised are reduced when the general ventilating mode is achieved.

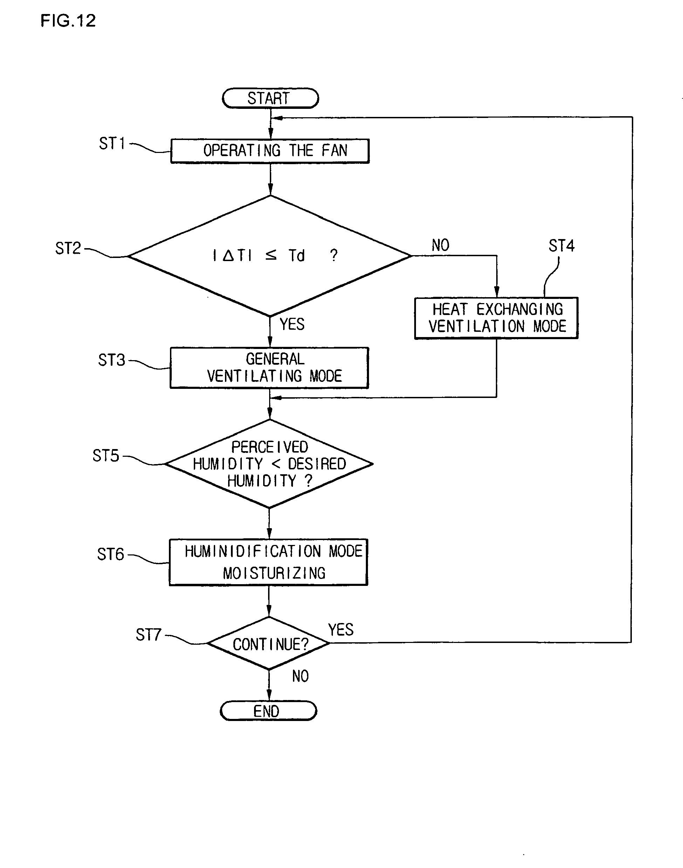

FIG. 11 is a block diagram of the ventilating apparatus according to the present invention, and FIG. 12 is an algorithm of the controlling method of the ventilating apparatus according to the present invention.

Referring to FIGS. 11 and 12, the operation of the ventilating apparatus is started by the operation of the fan ST1, and it is decided ST2 whether the absolute value of the temperature difference ΔT of the inner air and the outer air is under the set point Td. If it's under the set point, the damper 9 is controlled to be the general ventilating mode ST3, and if it's not under the set point, the damper 9 is controlled to be the heat exchanging ventilation mode ST4. Then, it is decided if the humidity perceived by the humidity sensor 47 is lower than the desired humidity ST5. The humidification mode moisturizing with the humidifier is achieved when the perceived humidity is lower than the desired humidity ST6. Then it is decided whether the operation of the ventilating apparatus is continued ST7, and the operation of the ventilating apparatus is continued or finished in accordance with the step 7.

The humidification mode may be controlled separately without any connection with the ventilating mode.

According to the present invention, the embodiment of the large capacity ventilating apparatus is possible as forming the heat exchange module and the blowing mode in a horizontal organization. Further, the flow resistance generated in the inside of the apparatus during the operation of the general ventilating mode is minimized.

Furthermore, it is effective that the temperature, the humidity conditions and ventilation as well for maintaining the indoor environment more agreeable are adjusted to the requirements of the users.

Moreover, it is effective that the designing of the discharging duct becomes simpler as the connection pipes of the outer air or the inner air are arranged on the top of the cabinet of the ventilating apparatus.

## Claims

1. A ventilating apparatus comprising:
an outer air suction duct (25;26) having an outer air inlet opening (5);
an inner air suction duct (53;54) having an Inner air inlet opening (7);
a heat transferring exchanger (30) heat exchanging the outer air and the Inner air inhaled through the outer suction duct and the Inner suction duct;
a blowing module (4) discharging the outer air and the inner air passed through the heat transferring exchanger to inside and outside separately;
a damper (9) controlling the flowing direction of the outer air Inhaled through the outer air suction duct;
**characterized in that** the outer air suction duct is separated as a first duct (25) and a second duct (26) by partitions, the outer air inhaled by the damper selectively flows Into the first duct and the second duct; and
**in that** the inner air suction duct is separated as a third duct (54) and a fourth duct (53) by partitions, the inner air inhaled by the damper selectively flows into the third duct and the fourth duct.

2. The ventilating apparatus according to claim 1,
wherein the blowing module (4) includes an air supplying fan (43) and an exhaust fan (41),
an air supply discharge duct connected with the air supplying fan, and an exhaust discharge duct connected with the exhaust fan.

3. The ventilating apparatus according to claim 1,
wherein further comprising a moisturizing mesh (46) equipped In the inside if the air supply discharge duct and an ejecting nozzle (45) supplying moisture to the air supply mesh.

4. The ventilating apparatus according to claim 3,
wherein further comprising a humidity sensor (47) provided at the end part of the air supply discharge duct.

## Patentansprüche

1. Belüftungsvorrichtung, die Folgendes umfasst:
einen äußeren Luftansaugkanal (25; 26), der eine äußere Luftansaugöffnung (5) aufweist;
einen inneren Luftansaugkanal (53; 54), der eine innere Luftansaugöffnung (7) aufweist;
einen Wärmetauscher (30), der einen Wärmetausch zwischen der äußeren Luft und der inneren Luft durchführt, die durch den äußeren Ansaugkanal und den inneren Ansaugkanal gesaugt wird;
ein Gebläsemodul (4), das die äußere Luft und die innere Luft, die den Wärmetauscher passiert, getrennt nach innen und nach außen austrägt;
einen Schieber (9), der die Strömungsrichtung der äußeren Luft, die durch den äußeren Luftansaugkanal gesaugt wird, steuert;
**dadurch gekennzeichnet, dass** der äußere Luftansaugkanal durch Abtrennungen in einen ersten Kanal (25) und einen zweiten Kanal (26) unterteilt ist, wobei die äußere Luft, die durch den Schieber angesaugt wird, selektiv in den ersten Kanal und den zweiten Kanal strömt; und
dass der innere Luftansaugkanal durch Abtrennungen in einen dritten Kanal (54) und einen vierten Kanal (53) unterteilt ist, wobei die innere Luft, die durch den Schieber angesaugt wird, selektiv in den dritten Kanal und den vierten Kanal strömt.

2. Belüftungsvorrichtung nach Anspruch 1,
wobei das Gebläsemodul (4) ein Luftzufuhrgebläse (43) und ein Abzugsgebläse (41) enthält,
ein Luftzufuhrabzugskanal mit dem Luftzufuhrgebläse verbunden ist und
ein Austragsabzugskanal mit dem Abzugsgebläse verbunden ist.

3. Belüftungsvorrichtung nach Anspruch 1,
die des Weiteren ein Befeuchtungsmaschennetz (46) umfasst, das im Inneren des Luftzufuhrabzugskanals angeordnet ist, und eine Ausspritzdüse (45) umfasst, die das Luftzufuhrmaschennetz mit Feuchtigkeit versorgt.

4. Belüftungsvorrichtung nach Anspruch 3,
die des Weiteren einen Feuchtigkeitssensor (47) umfasst, der am Endabschnitt des Luftzufuhrabzugskanals angeordnet ist.

## Revendications

1. Dispositif de ventilation comprenant :
un conduit d'aspiration d'air externe (25 ; 26) comportant une ouverture d'entrée d'air externe (5) ;
un conduit d'aspiration d'air interne (53 ; 54) comportant une ouverture d'entrée d'air interne (7) ;
un échangeur à transfert de chaleur (30) échangeant la chaleur de l'air externe et de l'air interne introduit à travers le conduit d'aspiration externe et le conduit d'aspiration interne ;
un module de soufflage (4) déchargeant l'air externe et l'air interne qui sont passés à travers l'échangeur à transfert de chaleur à l'intérieur et à l'extérieur séparément ;
un registre (9) commandant la direction de circulation de l'air externe introduit à travers le conduit d'aspiration d'air externe ;
**caractérisé en ce que** le conduit d'aspiration d'air externe est divisé en un premier conduit (25) et un deuxième conduit (26) par des cloisons, l'air externe introduit par le registre circule de manière sélective dans le premier conduit et le deuxième conduit ; et
**en ce que** le conduit d'aspiration d'air interne est divisé en un troisième conduit (54) et un quatrième conduit (53) par des cloisons, l'air interne introduit par le registre circule de manière sélective dans le troisième conduit et le quatrième conduit.

2. Dispositif de ventilation selon la revendication 1,
dans lequel le module de soufflage (4) comprend un ventilateur d'alimentation en air (43) et un ventilateur d'évacuation (41),
un conduit de décharge d'alimentation en air relié au ventilateur d'alimentation en air, et
un conduit de décharge d'évacuation relié au ventilateur d'évacuation.

3. Dispositif de ventilation selon la revendication 1,
comprenant en outre un tissu à mailles d'humidification (46) monté à l'intérieur du conduit de décharge d'alimentation en air et une buse d'éjection (45) délivrant de l'humidité au tissu à mailles d'alimentation en air.

4. Dispositif de ventilation selon la revendication 3,
comprenant en outre un capteur d'humidité (47) prévu dans la partie d'extrémité du conduit de décharge d'alimentation en air.
